# DEMANDE DE BREVET EUROPEEN

(11) **EP 0 818 730 A1**
(43) Date de publication de la demande: **14.01.1998**
(21) Numéro de dépôt: 97401589.3
(22) Date de dépôt: 03.07.1997
(51) Int. Cl.: G06F 9/46

(54) **Méthode de planification de transactions distribuées**

(30) Priorité: 11.07.1996 FR 9608673
(71) Demandeur: ALCATEL ALSTHOM COMPAGNIE GENERALE D'ELECTRICITE, 75382 Paris Cédex 08 (FR)
(72) Inventeur: Fouquet, Guy, 75012 Paris (FR)
(74) Mandataire: Feray, Valérie

(57) **Abrégé**

La méthode comprend les étapes consistant à :
- identifier (32), à chaque déclenchement d'une transaction courante, parmi les transactions plus anciennes en cours d'exécution, les traitements activés ou en attente d'être activés de ces transactions qui sont conflictuels avec un traitement particulier de la transaction courante,
- associer (33) à chaque traitement particulier de la transaction courante un compteur dont la valeur est indicative du nombre de traitements conflictuels appartenant aux transactions plus anciennes et décrémenter (35) la valeur de ce compteur au fur et à mesure de la terminaison des traitements conflictuels de telle sorte à activer le traitement particulier de la transaction courante seulement quand son compteur indique qu'il n'y a plus de traitements conflictuels.

## Description

L'invention porte sur une méthode de planification de transactions distribuées pour un moniteur transactionnel.

On entend par transaction distribuée, un ensemble partiellement ordonné de traitements à exécuter à distance et distribués entre plusieurs processus. Ces traitements peuvent par exemple être des méthodes instanciées dans des objets potentiellement répliqués sur plusieurs processus.

Un moniteur transactionnel sert à sérialiser les activations (ou invocations) des traitements des transactions en respectant l'ordre chronologique de déclenchement de ces transactions.

Au niveau du moniteur, chaque transaction est déclenchée sur réception d'un événement. Par ailleurs, au cours de l'exécution d'une transaction, la terminaison d'un traitement donne lieu à la réception d'un événement ce qui permet d'activer un traitement subséquent de la transaction.

Dans les applications industrielles de contrôle/commande, il existe un besoin de maintenir une image cohérente du procédé surveillé de façon à contrôler son comportement. La gestion des données reflétant l'image du procédé est réalisée par l'intermédiaire d'une application et l'interaction entre l'application et le procédé est assurée par la réception et l'envoi d'événements sur des capteurs répartis sur le procédé. Le procédé étant par nature distribué, l'application utilise des transactions distribuées pour maintenir une image cohérente du procédé dans une base de données. Ces applications industrielles de contrôle/commande fonctionnant en temps réel souple, il est important de pouvoir déclencher en parallèle plusieurs transactions mais une telle possibilité de déclenchement en parallèle des transactions pose un problème au niveau de la planification de l'activation des traitements. En effet, ces transactions peuvent comporter certains traitements identiques ou analogues, dits conflictuels, car ne pouvant être exécutés en même temps en raison du fait qu'ils interagissent sur les mêmes données.

Le but de l'invention est de proposer une méthode de planification de transactions distribuées pour un moniteur transactionnel, avec possibilité de déclenchement en parallèle des transactions, aux fins de sérialiser les activations des traitements des transactions en respectant l'ordre chronologique de déclenchement des transactions et en tenant compte des conflits d'exécution entre traitements de transactions différentes ou d'une même transaction.

Un autre but de l'invention est de proposer une telle méthode de planification qui soit adaptée à des transactions complexes incluant le cas échéant des séquences de recouvrement.

A cet effet, la méthode de planification selon l'invention comprend les étapes consistant à :
- à chaque déclenchement d'une transaction courante, identifier parmi les transactions plus anciennes en cours d'exécution, les traitements activés ou en attente d'être activées de ces transactions qui sont conflictuels avec un traitement particulier de la transaction courante,
- pour chaque traitement particulier de la transaction courante pour lequel un certain nombre de traitements conflictuels ont été identifiés, associer (33) à ce traitement particulier un compteur dont la valeur est indicative du nombre de traitements conflictuels avec ce traitement particulier, décrémenter (35) la valeur de ce compteur au fur et à mesure de la terminaison des traitements conflictuels avec ce traitement particulier de telle sorte à activer ce traitement particulier seulement quand le compteur de ce traitement particulier indique qu'il n'y a plus de traitements conflictuels avec celui-ci.

Un exemple de mise en oeuvre de l'invention est décrit plus en détails ci-après en référence aux dessins.

La figure 1 illustre des exemples d'expressions de transactions distribuées.

La figure 2 illustre une représentation, sous forme de graphes, des expressions de transactions de la figure 1.

La figure 3 illustre, sous forme d'un organigramme, les principales étapes de la méthode de planification selon l'invention.

La figure 4 illustre un exemple d'enchaînement d'activations des traitements des transactions de la figure 1 en appliquant la méthode de planification selon l'invention.

La figure 5 illustre la sérialisation des activations de traitements en sortie du moniteur transactionnel pour l'exemple d'enchaînement des traitements de la figure 4.

La méthode de planification selon l'invention est adaptée à des transactions dont les traitements peuvent être activés en séquence, en parallèle, choisis à travers une expression conditionnelle ou encore itérés dans une boucle.

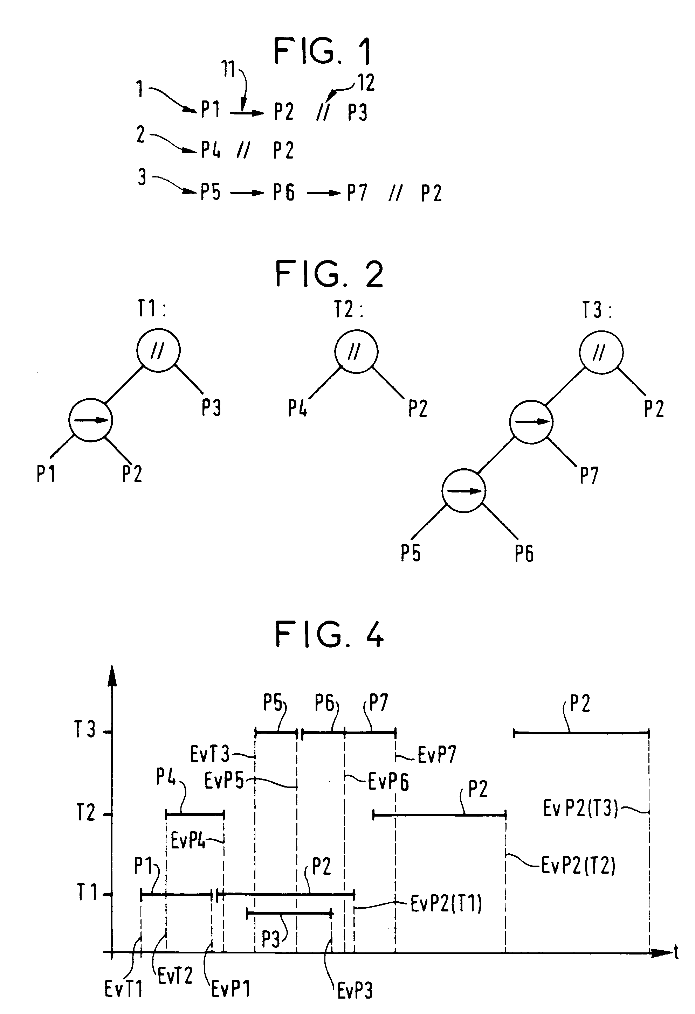

Figure 1, les trois expressions de transactions indiquées respectivement par 1,2 et 3 sont relativement simples. Elles font intervenir un opérateur d'enchaînement de traitements en séquence indiqué par 11 et un opérateur d'enchaînement de traitements en parallèle indiqué par 12. Par ailleurs, chaque expression de transaction définit un certain ordre chronologique selon lequel les traitements de la transaction considérée doivent être enchaînés.

Ainsi, pour la transaction 1, l'activation du traitement P2 est enchaînée après la terminaison du traitement P1 (activation en séquence) tandis que l'activation du traitement P3 peut être enchaînée après l'activation du traitement P2 sans attendre la terminaison de P2, c'est-à-dire en parallèle avec le traitement P2.

Pour la transaction 2, l'activation du traitement P2 est enchaînée après l'activation du traitement P4 sans attendre la terminaison de P4.

Pour la transaction 3, l'activation du traitement P6 est enchaîné après la terminaison du traitement P5, l'activation du traitement P7 est enchaînée après la terminaison du traitement P6 et l'activation du traitement P2 est enchaînée après l'activation du traitement P7 sans attendre la terminaison de P7.

On remarquera que les expressions des transactions de la figure 1 sont structurées comme des expressions régulières avec des opérateurs plus ou moins prioritaires les uns par rapport aux autres.

Figure 2, les expressions indiquées par 1,2,3 des transactions T1,T2,T3 de la figure 1 sont montrées sous la forme de graphes orientés avec des feuilles correspondant aux traitements et des noeuds correspondant aux opérateurs d'enchaînement des traitements. Ces graphes sont classiquement implémentés en mémoire sous la forme de listes chaînées qui définissent l'ordre chronologique selon lequel les traitements de chaque transaction doivent être activés.

Les trois transactions T1,T2 et T3 représentées sur la figure 2 comportent un traitement commun, le traitement P2. Si ces trois transactions peuvent être déclenchées en parallèle, on voit qu'il existe une possibilité de conflit sur le traitement P2. En effet, pour respecter l'ordre causal de déclenchement des transactions, à supposer que T3 soit déclenchée après T2 et que T2 soit déclenchée après T1, il est nécessaire que le traitement P2 de T3 soit activé seulement après la terminaison du traitement P2 de T2. De même, il est nécessaire que le traitement P2 de T2 soit activé seulement après la terminaison du traitement P2 de T1.

Les traitements P2 de T1, P2 de T2 et P2 de T3 sont des traitements conflictuels. La méthode de planification selon l'invention permet d'éviter d'une façon simple que ces traitements conflictuels soient activés en parallèle.

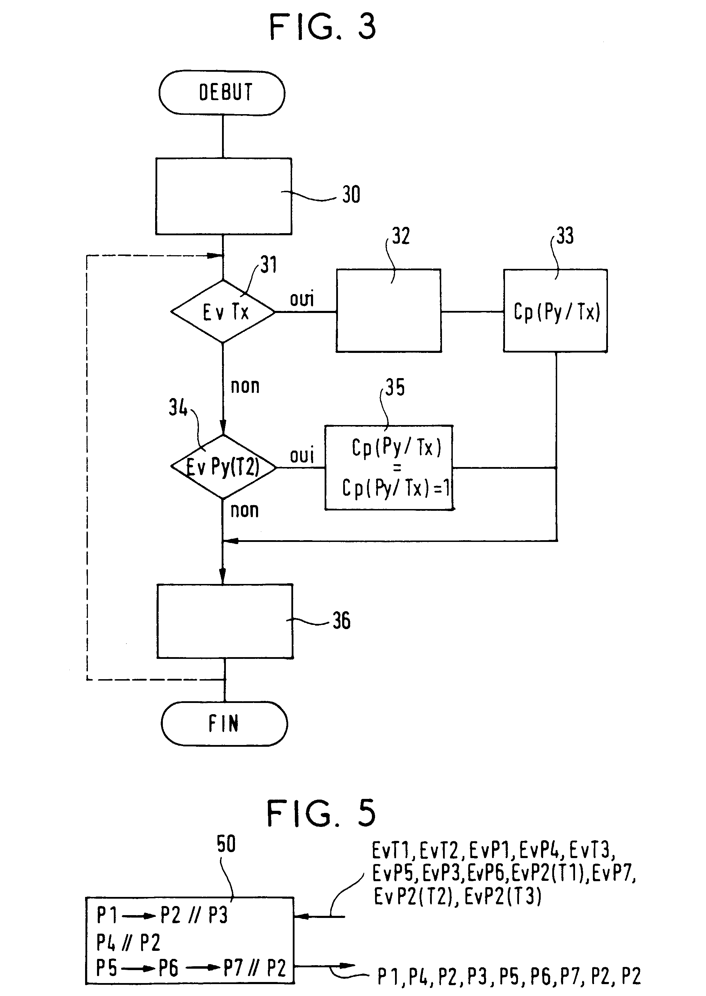

Figure 3, dans la méthode de planification selon l'invention, les expressions de transactions, structurées avantageusement sous la forme d'expressions régulières, sont entrées en mémoire dans le moniteur transactionnel et sont traitées, par analyse syntaxique et sémantique, pour être implémentées sous la forme de listes chaînées (bloc 30) qui indiquent chacune l'ordre selon lequel les traitements de chaque transaction doivent être activés.

Chaque transaction entrée dans le moniteur transactionnel est planifiée suite à la réception d'un événement indicatif du déclenchement de cette transaction (événement EvTx dans le bloc 31). Cette transaction est dite transaction courante Tx par opposition à des transactions déjà déclenchées et en cours d'exécution.

La planification de la transaction courante Tx consiste d'abord à identifier (bloc 32), parmi les traitements activés ou en attente d'être activés des transactions plus anciennes déjà déclenchées et en cours d'exécution, s'il existe des traitements qui sont conflictuels avec un ou plusieurs traitements particuliers de la transaction courante. Cette identification peut être basée sur une recherche dans une table répertoriant les transactions conflictuelles et préalablement entrée dans le moniteur transactionnel et mise à jour au fur et à mesure de la terminaison de ces traitements conflictuels pour indiquer quels sont les traitements conflictuels en cours d'exécution ou en attente d'être activés.

Ensuite, un compteur Cp(Py/Tx)est associé (bloc 33) à chaque traitement particulier Py de la transaction courante Tx pour lequel un certain nombre de traitements conflictuels ont été identifiés, et la valeur du compteur associé à un traitement particulier (bloc 33) est mise pour être indicative du nombre de traitements conflictuels avec celui-ci.

Quand la planification de la transaction courante Tx est terminée, cette transaction courante est exécutée (bloc 36), c'est à dire que les activations des traitements de cette transaction courante sont enchaînées selon l'ordre donné par l'expression de la transaction. Toutefois, l'activation d'un traitement particulier de la transaction courante sera retardée tant que le compteur associé à ce traitement particulier indique qu'il y a encore des traitements conflictuels avec celui-ci.

La valeur du compteur associé à ce traitement particulier est décrémentée (bloc 35) au fur et à mesure de la terminaison des traitements conflictuels avec celui-ci (c'est-à-dire au cours de l'exécution des transactions plus anciennes), signalée au moniteur transactionnel par la réception d'un événement (bloc 34) indiqué sur la figure par EvPy(Tz), jusqu'à ce qu'il n'y ait plus de traitements conflictuels. Au moment où il n'y a plus de traitements conflictuels avec le traitement particulier, ce traitement particulier peut être activé.

La figure 4 illustre très schématiquement un exemple d'enchaînement des activations des traitements pour les transactions T1,T2,T3.

Sur cette figure, la transaction T1 est d'abord déclenchée suite à la réception d'un événement déclenchant indiqué par EvT1. Au moment où cette transaction courante est déclenchée, il n'existe pas de transaction plus ancienne en cours d'exécution et par conséquent les compteurs associés respectivement aux traitements de T1 indiquent qu'il n'y a pas de traitements conflictuels. La transaction T1 est exécutée et le traitement P1 est d'abord activé.

Puis la transaction T2 est ensuite déclenchée suite à la réception de l'événement EvT2. La transaction T2 est alors planifiée en tenant compte des traitements conflictuels de T1. En effet, le traitement P2 de T2 est conflictuel avec le traitement P2 de T1 en attente d'être activé. Par conséquent, le compteur associé au traitement P2 de T2 a une valeur qui est mise à 1 pour indiquer qu'il existe un traitement conflictuel (Cp(P2/T2)=1). La transaction T2 est exécutée et le traitement P4 est activé.

Suite à la terminaison du traitement P1 (indiquée par la réception de l'événement EvP1), le traitement P2 de T1 est activé. Le traitement P4 est maintenant terminé (réception de EvP4) mais l'activation du traitement P2 de T2 est retardée puisque la valeur du compteur associé au traitement P2 de T2 indique qu'il y a un traitement conflictuel (Cp(T2/T2)=1) .

Le traitement P3 de T1 est maintenant activé en parallèle avec le traitement P2 de T1.

La transaction T3 est maintenant déclenchée suite à la réception de l'événement EvT3. La transaction T3 est alors planifiée et il existe pour le traitement P2 de T3 deux traitements conflictuels activés ou en attente d'être activés, respectivement le traitement P2 de T1 et le traitement P2 de T2. La valeur du compteur associé au traitement P2 de T3 est mise à 2 (Cp(P2/T3)=2).

La transaction T3 est maintenant exécutée et le traitement P5 est activé. Suite à la terminaison du traitement P5 (réception de EvP5), le traitement P6 est activé. Le traitement P3 est maintenant terminé (réception de EvP3) et suite à la terminaison du traitement P6 (réception de EvP6), le traitement P7 est activé.

Maintenant, suite à la terminaison du traitement P2 de T1 indiquée par la réception d'un événement EvP2(T1), la valeur des compteurs associés respectivement au traitement P2 de T2 et au traitement P2 de T3 est décrémentée (Cp(P2/T2)=0 et Cp(P2/T3)=1). Le traitement P2 de T2 peut maintenant être activé.

Maintenant, le traitement P7 est terminé (réception de EvP7) et suite à la terminaison du traitement P2 de T2 indiquée par la réception de l'événement EvP2(T2), la valeur du compteur associé au traitement P2 de T3 est décrémentée (Cp(P2/T3)=0). Le traitement P2 de T3 peut maintenant être activé. L'événement EvP2(T3) est finalement reçu et l'exécution des transactions est terminée.

Figure 5, le moniteur transactionnel 50 sérialise les transactions T1,T2,T3 de façon à produire la séquence d'activations de traitements suivante :
P1-P4-P2-P3-P5-P6-P7-P2-P2,
en respectant l'ordre d'arrivée des événements de déclenchement des transactions, l'ordre d'enchaînement des traitements à l'intérieur de chaque transaction et l'ordre d'arrivée des événements de terminaison des traitements qui sont dans le cas d'exemple :
EvT1,EvT2,EvP1,EvP4,EvT3,EvP5,EvP3,EvP6,EvP2(T1),EvP7, EvP2(T2),EvP2(T3).

La méthode de planification de transactions distribuées selon l'invention est aussi adaptée à la gestion de transactions incluant des séquences de recouvrement. Une séquence de recouvrement dans une transaction correspond à une branche du graphe de la transaction qui est exécutée sur réception d'un événement particulier, dit événement d'exception, suite à un problème d'exécution d'un traitement de cette transaction. Une séquence de recouvrement pour une transaction peut comprendre bien entendu plusieurs traitements qui s'enchaînent et qui se substituent à certains autres traitements de la transaction. Quand un tel événement d'exception est reçu par le moniteur transactionnel pour une transaction en cours d'exécution, la séquence de recouvrement de cette transaction doit être planifiée en utilisant le principe de gestion des compteurs pour tenir compte des conflits éventuels entre les traitements de la séquence de recouvrement et les traitements des autres transactions en cours d'exécution.

## Revendications

1. Une méthode de planification de transactions distribuées (T1,T2,T3) pour un moniteur transactionnel, avec possibilité de déclenchement en parallèle des transactions, aux fins de sérialiser les activations des traitements (P1 à P7) des transactions en respectant l'ordre chronologique de déclenchement de ces transactions, comprenant les étapes consistant à :
- à chaque déclenchement d'une transaction courante, identifier (32) parmi les transactions plus anciennes en cours d'exécution, les traitements activés ou en attente d'être activées de ces transactions qui sont conflictuels avec un traitement particulier de la transaction courante,
- pour chaque traitement particulier de la transaction courante pour lequel un certain nombre de traitements conflictuels ont été identifiés, associer (33) à ce traitement particulier un compteur dont la valeur est indicative du nombre de traitements conflictuels avec ce traitement particulier, décrémenter (35) la valeur de ce compteur au fur et à mesure de la terminaison des traitements conflictuels avec ce traitement particulier de telle sorte à activer ce traitement particulier seulement quand le compteur de ce traitement particulier indique qu'il n'y a plus de traitements conflictuels avec celui-ci.
